Europäisches Patentamt

European Patent Office

Office européen des brevets

(11) Publication number: **0 236 066 B1**

# EUROPEAN PATENT SPECIFICATION

(45) Date of publication of patent specification: **11.12.91**   (51) Int. Cl.⁵: **C01D 3/14, B01J 47/10**

(21) Application number: **87301654.7**

(22) Date of filing: **25.02.87**

(54) **Purification of alkali metal chloride solution.**

(30) Priority: **05.03.86 GB 8605416**

(43) Date of publication of application:
**09.09.87 Bulletin 87/37**

(45) Publication of the grant of the patent:
**11.12.91 Bulletin 91/50**

(84) Designated Contracting States:
**BE DE FR GB IT NL SE**

(56) References cited:
**FR-A- 2 139 933**
**FR-A- 2 187 703**
**GB-A- 889 296**

**CHEMICAL ABSTRACTS, vol. 102, no. 8, February 1985, page 130, abstract no. 64396r, Columbus, Ohio, US; & JP-A-59 190 215 (TOA GOSEI CHEMICAL INDUSTRY CO., LTD) 29-10-1984**

(73) Proprietor: **IMPERIAL CHEMICAL INDUSTRIES PLC**
**Imperial Chemical House, Millbank**
**London SW1P 3JF(GB)**

(72) Inventor: **Alcorn, Thomas Eric**
**20 Ennerdale Drive**
**Frodsham Cheshire(GB)**
Inventor: **Kelham, Stephen**
**8 Cedarwood Delamere Cuddington Park**
**Delamere Cheshire CW8 ZXR(GB)**

(74) Representative: **Walmsley, David Arthur Gregson et al**
**Imperial Chemical Industries PLC Legal department: Patents PO Box 6 Bessemer Road Welwyn Garden City Hertfordshire AL7 1HD(GB)**

## Description

This invention relates to a process for the purification of an aqueous alkali metal chloride solution and to an apparatus in which the purification process may be carried out.

Aqueous solutions of alkali metal chlorides are electrolysed on a vast scale throughout the world to produce aqueous alkali metal hydroxide solution and chlorine. Prior to electrolysing such a solution it is generally necessary to purify the solution, and in particular it is necessary to remove from the solution polyvalent metal compounds, for example, compounds of alkaline earth metals, e.g. compounds of calcium, magnesium and strontium, or at least to reduce the concentration of such compounds in the solution to an acceptable level. Where the concentration of such polyvalent metal compounds is not reduced to an acceptable level problems are created when the aqueous alkali metal chloride solution is electrolysed.

An aqueous alkali metal chloride solution may be electrolysed in a mercury cell which comprises a flowing mercury cathode and a graphite or metal anode. The solution is electrolysed in such a cell to produce an alkali metal amalgam and chlorine, the alkali metal amalgam is removed from the cell and reacted with water to produce an aqueous alkali metal hydroxide solution and hydrogen, and the resultant mercury or weak amalgam is returned to the electrolytic cell. The presence of polyvalent metal compounds of, for example, calcium, magnesium and/or strontium in the solution which is electrolysed is one of the contributory causes of the formation of so-called thick mercury, or mercury butter, on the base plate of the cell, and the presence of the thick mercury on the base plate leads to short-circuits in the cell between the anodes and the flowing mercury cathode. In order to eliminate such short-circuits it is necessary to increase the inter-electrode gap with consequent increase in the voltage of operation of the cell.

Aqueous alkali metal chloride solution may be electrolysed in an electrolytic cell equipped with a separator, which may be of the hydraulically permeable diaphragm type or of the substantially hydraulically impermeable ion-exchange membrane type.

In the diaphragm type cell the separators positioned between adjacent anodes and cathodes are microporous and in use the electrolyte passes through the diaphragms from the anode compartments to the cathode compartments of the cell. Where an aqueous alkali metal chloride solution is electrolysed in an electrolytic cell of the diaphragm type the solution is charged to the anode compartments of the cell, chlorine which is produced in the electrolysis is removed from the anode compartments of the cell, the alkali metal chloride solution passes through the diaphragms to the cathode compartments of the cell, and hydrogen and alkali metal hydroxide produced by electrolysis are removed from the cathode compartments, the alkali metal hydroxide being removed in the form of an aqueous solution of alkali metal chloride and alkali metal hydroxide.

In the membrane type cell the separators are essentially hydraulically impermeable and in use ionic species are transported across the membranes between the anode compartments and the cathode compartments of the cell. Where an aqueous alkali metal chloride solution is electrolysed in an electrolytic cell of the membrane type the solution is charged to the anode compartments of the cell and chlorine produced in the electrolysis and depleted alkali metal chloride solution are removed from the anode compartments, alkali metal ions are transported across the membranes to the cathode compartments of the cell to which water or dilute alkali metal hydroxide solution may be charged, and hydrogen and alkali metal hydroxide solution produced by the reaction of alkali metal ions with water are removed from the cathode compartments of the cell.

Where the aqueous alkali metal chloride solution is electrolysed in a cell equipped with a hydraulically permeable diaphragm and the solution contains polyvalent metal compounds, e.g. compounds of calcium, magnesium and/or strontium, these metals are precipitated as hydroxides in the pores of the diaphragm with the result that the porosity of the diaphragm decreases and the voltage of the electrolysis increases, and ultimately the diaphragm may even become impermeable. Where the aqueous alkali metal chloride solution is electrolysed in a cell equipped with a hydraulically impermeable ion-exchange membrane and the solution contains polyvalent metal compounds, e.g. compounds of calcium, magnesium and/or strontium, these metals are precipitated as hydroxides on and even within the membrane, the efficiency of the membrane in transporting alkali metal ions is decreased, the structure of the membrane is disrupted, and, where the membrane is in the form of a laminate of two or more films, the membrane may become delaminated.

Various methods may be used to remove compounds of polyvalent metals from aqueous alkali metal chloride solution. For example, the solution may be contacted with an aqueous solution containing hydroxyl ions and an aqueous solution containing carbonate ions, for example with solutions of alkali metal hydroxide and alkali metal carbonate, e.g. with solutions of sodium hydroxide and sodium carbonate in the case of a sodium chloride solution, or with solutions of potassium hydroxide and potassium carbonate in the case of a potassium chloride solution, in order to precipitate the polyvalent metals as the carbonates or hydroxides, and the precipitated carbonates or hydroxides may be removed from the solution, e.g. by sedimentation and/or by filtration. Such a purification process generally results in a solution in which the polyvalent metal compounds are present in the solution at a concentration of less than 100 parts per million (ppm) which is acceptable for use in mercury cells. Provided that a sufficient excess of hydroxide solution and carbonate solution are used and provided that a suitable filtration step is included in the purification process it is possible to achieve a concentration of polyvalent metal compounds in the alkali metal chloride solution of less than 3 ppm, which is acceptable for use in diaphragm cells. However, where the alkali metal chloride solution is to be electrolysed in a cell equipped with an ion-exchange membrane the concentration of polyvalent metal compounds, and in particular the concentration of compounds of calcium, magnesium and/or strontium, must be reduced to a level substantially below that which is achievable by the hydroxide/carbonate purification process, a total concentration of such compounds of less than 0.02 ppm generally being necessary or at least desirable.

In order to achieve such a low concentration of polyvalent metal compound the aqueous alkali metal chloride solution which has been purified by the hydroxide/carbonate method is thereafter contacted with an ion-exchange material which removes polyvalent metal ions from the solution, for example iron, chromium, mercury, nickel and/or aluminium ions in addition to the alkaline earth metal ions, e.g. calcium, magnesium and/or strontium. Such a process is, for example, described in Chemical Abstracts Volume 102, Number 8, 1985, abstract number 64396r, in which there is described passing aqueous NaCl solution through a cation exchange resin column at 65-75°C and regenerating the exchange resin by washing with $H_2O$, 0.1N HCl, $H_2O$ and 0.1N NaOH.

In conventional practice the purification plant is equipped with at least two columns filled with ion-exchange material. The aqueous alkali metal chloride solution is passed, for example, through a first column and after this first column has been used for some time and the ion-exchange material requires regeneration it is taken out of service and the aqueous alkali metal chloride solution is passed through a second column filled with ion-exchange material, and the material in the first column is regenerated ready for re-use when the material in the second column itself requires regeneration. The purification plant may comprise three or more such columns filled with ion-exchange material some of the columns being used to purify aqueous alkali metal chloride solution whilst the material in others of the columns is being regenerated prior to re-use in purification.

Processes and apparatus for the desalination of water or other liquids, which processes may be operated in a continuous manner in a single apparatus have also been described, for example, in FR-A-2 139 933 and FR-A-2 187 703.

The present invention relates to a purification process of the type described, and to an apparatus for carrying out the process, which does not require the provision of a plurality of columns filled with ion-exchange material, which does not require columns to be taken out of service periodically and which may be operated in a continuous manner in a single apparatus.

According to the present invention there is provided a process for removing ionic impurities from an aqueous solution of an alkali metal chloride by contacting the solution with an ion-exchange material and thereafter contacting the ion-exchange material with a liquid medium to regenerate the ion-exchange material, in which the process is effected in an apparatus which comprises at least a first vessel positioned above at least a second vessel in which the first vessel is operatively connected to the second vessel by means of a first pipe having its upper end positioned near the bottom of the first vessel and its lower end positioned near the top of the second vessel through which ion-exchange material flows under gravity and in which the second vessel is operatively connected to the first vessel by means of a second pipe which extends upwardly and internally of the second vessel, between the second vessel and the first vessel and then upwardly and internally of the first vessel with its lower end positioned near the bottom of the second vessel and its upper end positioned near the top of the first vessel, and in which the process comprises effecting contact between ion-exchange material and the liquid medium in the first vessel, effecting contact between ion-exchange material and the aqueous alkali metal chloride solution in the second vessel, and tranferring ion-exchange material from the bottom of the first vessel to the top of the second vessel and from the bottom of the second vessel to the top of the first vessel.

The process of this invention may be effected continuously. Thus, in the second vessel contact may be effected between the ion-exchange material and the aqueous alkali metal chloride solution as the solution and the material flow through the vessel, the material and the solution preferably flowing countercurrent to each other. In the first vessel contact may be effected between the ion-exchange material and the regenerative liquid medium as the material and the solution flow through the vessel, the material and the liquid medium preferably flowing countercurrent to each other. Ion-exchange material from the second vessel which requires regeneration is transferred to the first vessel, preferably continuously, and the ion-exchange material from the first vessel, which has been regenerated, is transferred to the second vessel, preferably continuously.

The invention also provides an apparatus in which removal of ionic impurities from an aqueous solution of an alkali metal chloride may be effected by contacting the solution with an ion-exchange material and thereafter contacting the ion-exchange material with a liquid medium to regenerate the ion-exchange material, which apparatus comprises at least a first vessel positioned above at least a second vessel in which the first vessel is operatively connected to the second vessel by means of a first pipe having its upper end positioned near the bottom of the first vessel and its lower end positioned near the top of the second vessel through which ion-exchange material flows under gravity and in which the second vessel is operatively connected to the first vessel by means of a second pipe which extends upwardly and internally of the second vessel, between the second vessel and the first vessel and then upwardly and internally of the first vessel with its lower end positioned near the bottom of the second vessel and its upper end positioned near the top of the first vessel, so that the ion-exchange material may be transferred from the bottom of the second vessel to the top of the first vessel.

In this specification aqueous sodium chloride solution will be referred to hereafter rather than the generic alkali metal chloride, it being understood that the invention is applicable to the purification of aqueous solutions of alkali metal chlorides other than sodium chloride, for example potassium chloride.

The purification which is referred to in the specification is the removal of impurities, generally soluble impurities, from the solution by contacting the solution with an ion-exchange material. The ion-exchange material may be an anion-exchange material which is capable of removing undesirable anions from the solution, or it may be a cation-exchange material which is capable of removing undesirable cations from the solution. The material will generally be of the latter type and be capable of removing polyvalent cations from the solution, for example alkaline earth metal cations, e.g. calcium, magnesium and/or strontium ions. Although alkaline earth metal cations are the principle ions to be removed from the solution, other polyvalent cations, for example, iron, mercury, chromium, nickel and/or aluminium cations which may be present in the solution may be removed from the solution in the process of the invention.

The ion-exchange material may comprise a mixture of materials. The ion exchange material may be a liquid material, although it will generally be a solid material.

In this specification an ion-exchange material is referred to and within the scope of this expression it is intended to include not only materials which remove polyvalent metal ions from the solution by exchange with ions present in the material but also materials which remove polyvalent metal ions from solution by means other than exchange, for example which remove such ions from solution by complexing with the polyvalent metal ions present in the solution. An example of such a material is a chelating resin. Many examples of such materials which are capable of removing polyvalent metal ions from solution are known in the art and it is unnecessary to disclose specific examples of such materials. The man skilled in the art will have no difficulty in selecting suitable such materials. However, by way of example suitable such materials sold under the Registered Trade Marks Duolite, Amberlite, Lewatit and Diaion may be mentioned.

The apparatus comprises at least a first vessel in which regeneration of the ion-exchange material is effected by contact with the liquid medium, and at least a second vessel in which purification of the aqueous sodium chloride solution is effected by contact with the ion-exchange material. The regeneration may be effected in a plurality of first vessels, or in a single first vessel which may be divided into a plurality of compartments, for example, by means of a suitable baffles or baffles. Similarly, purification of the aqueous alkali metal chloride solution may be effected in a plurality of second vessels, or in a single vessel which may be divided into a plurality of compartments, for example, by means of a suitable baffle or baffles. However, for simplicity the invention will be described hereafter by reference to a single first vessel and a single second vessel only.

The first and second vessels are operatively connected by means of a second pipe so that ion-exchange material is transferred from the second vessel to the first vessel. The lower end of the second pipe is positioned at or near the bottom of the second vessel and the upper end of the second pipe is positioned at or near the top of the first vessel so that material which requires regeneration may be transferred from the bottom of the second vessel to the top of the first vessel. The first vessel is positioned above the second vessel so that ion-exchange material flows from the first vessel to the second vessel via the first pipe under the force of gravity. It necessarily follows that means must be provided to cause ion-exchange material to be transferred from a lower second vessel to an upper first vessel, via the second pipe. In order to effect transfer of the ion-exchange material from the second vessel to the first vessel via the pipe, the second vessel may be provided with means for introducing a stream of air or water or aqueous sodium chloride solution into the vessel.

The first vessel is provided with means for introducing regenerative liquid medium into the vessel, and preferably a plurality of such liquid media into the vessel, and with means for removing liquid media therefrom. These means are preferably positioned so that the liquid media flow upwardly through the first vessel. Similarly, the second vessel is provided with means for introducing aqueous sodium chloride solution into the vessel and with means for removing the solution therefrom which are preferably so positioned that the solution flows upwardly through the second vessel.

At least one of the first and second vessels, and possibly both, are provided with means for charging ion-exchange resin to the vessel(s).

The vessels and the associated pipework and valves which may form part of the apparatus will be constructed of corrosion resistant material, or at least lined with such corrosion resistant material. This material should be resistant to the known corrosive properties of aqueous sodium chloride solution and of the regenerative liquid medium. Suitable materials include, for example, titanium, fluorine-containing polymeric materials, e.g. polyvinylidene fluoride, and glass-fibre reinforced polyvinyl chloride. The vessel and associated pipeworks may be constructed of rubber-lined steel. It is particularly suitable to use polytetrafluoroethylene lined valves. These corrosion resistant materials are merely disclosed by way of example and are in no sense limiting.

In the process of the invention the ion-exchange material flows through the second vessel, as does the aqueous sodium chloride solution, preferably in a counter current manner, and the material and the solution are contacted so that impurities may be removed from the solution. The rates of flow of the material and of the solution, and thus the contact time between the material and the solution, will depend on a number of factors. For example, these rates of flow, and contact times, will depend inter alia on the efficiency of the ion-exchange material in removing impurities from the solution and on the volume of ion-exchange material in the vessel, on the initial concentration of impurities in the solution, and on the final concentration of impurities which is required in the solution. Where the ion-exchange material is particularly efficient at removing impurities the contact time between the material and the solution may be short, the rate of flow of the solution may be fast, and the rate of flow of the ion-exchange material may be slow. Thus, it may be possible to treat a relatively large volume of solution before it becomes necessary to transfer material to the first vessel for regeneration. On the other hand, where the ion-exchange material is not particularly efficient at removing impurities from the solution the contact time between the material and the solution may need to be longer, a slower rate of flow of solution may be necessary, and a faster rate of flow of material may be necessary. Thus, it may be possible to treat only a relatively small volume of solution before it becomes necessary to transfer the material to the first vessel for regeneration. Similarly, the rates of flow of the ion-exchange material and of the regenerative liquid medium through the second vessel will depend on the contact time which is required between the liquid media and the ion-exchange material in order to effect regeneration.

In the process of the invention the aqueous sodium chloride in the solution thereof may be present in a concentration up to that of a saturated solution. It is desirable that the impurities in the aqueous sodium chloride solution which are to be removed in the process are present in a low concentration, and it is preferred that the concentration of impurities in the solution has been reduced to as low a level as possible before treatment of the solution in the process of the invention. For example, where the aqueous sodium chloride solution contains alkaline earth metal compounds it is desirable that the concentration of these compounds is reduced to a low level by application of the hydroxide/carbonate purification procedure to the solution prior to treatment of the solution in the process of the invention, although this will depend, for example on the relative costs of purification by a preliminary purification procedure and of purification by the process of the invention. For example, where the solution contains alkaline earth metal compounds it may be desirable that the concentration of these compounds is reduced to a low level by application of the hydroxide/ carbonate purification procedure to the solution prior to treatment of the solution in the process of the invention in order that the ion-exchange material may remain usable for a long time before it requires regeneration, although this will depend on the relative costs of purification by the hydroxide/ carbonate procedure and by the process of the invention. However it is generally desirable that the total concentration of polyvalent metal compounds, e.g. of alkaline earth metal compounds, in the solution prior to treatment of the solution in the process of the invention be below 20 ppm (parts per million) by weight of the solution.

The nature of the ion-exchange material will depend of course on the impurities which are to be removed from the aqueous sodium chloride solution. Where alkaline earth metal cations and or other polyvalent metal cations are to be removed the material will be a cation-exchange material. Examples of suitable materials include those sold commercially under the trade names Duolite, Amberlite, Lewatit and Diaion. Any suitable ion-exchange material may be used and the choice of such material will be dictated by the nature of the impurities to be removed from the solution.

Similarly, the nature of the liquid medium used to regenerate the ion-exchange material will depend on the nature of the latter material and on the impurites which have been removed by the material from the aqueous sodium chloride solution. For example, where alkaline earth metal ions are removed from the solution by a cation-exchange material the material may be regenerated by contacting the material with acid, e.g. with sulphuric acid or with hydrochloric acid, in order to displace alkaline earth metal ions from the material, and thereafter the material may contacted with aqueous alkali metal hydroxide solution, e.g. sodium hydroxide solution, in order to introduce alkali metal ions into the material, the material then being suitable for re-use in purification. In a preferred embodiment of the regeneration step of the process the material in the first vessel is contacted sequentially with acid and with aqueous alkali metal hydroxide solution. Where the regenerative liquid media pass upwardly through the first vessel the acid may be introduced into the vessel at a point above that at which the aqueous alkali metal hydroxide solution is introduced. Water may also be introduced into the first vessel at a point between that at which the acid and aqueous alkali metal hydroxide solution are introduced in order that that residual acid may be washed from the ion-exchange material prior to contacting the acid-treated material with the aqueous alkali metal hydroxide solution.

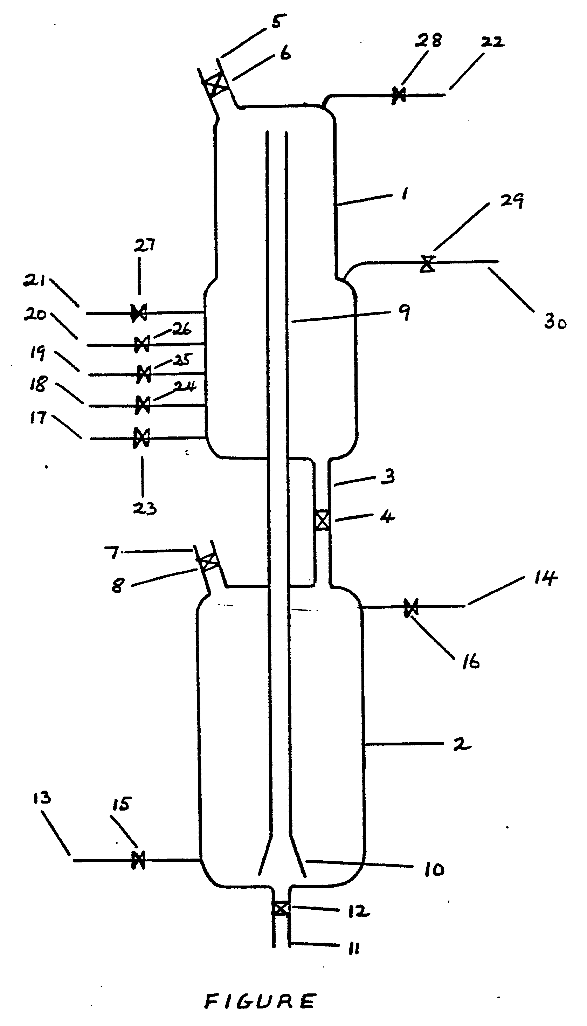

The process of the invention will now be described by reference to the Figure which is a diagrammatic representation in elevation of an apparatus in which the process of the invention was carried out.

The apparatus comprises a first vessel 1 positioned vertically above a second vessel 2, the vessels 1 and 2 being connected by means of a pipe 3 having a valve 4 positioned therein. The vessel 1 has an orifice 5 which is closed by a valve 6 and through which ion-exchange material may be charged to the vessel 1. Similarly, the vessel 2 has an orifice 7 which is closed by a valve 8 and through which ion-exchange material may be charged to the vessel 2. The vessels 1 and 2 are also connected by a pipe 9 which is splayed at its lower end 10 and which is positioned internally of the vessels 1 and 2 and which extends from the lower part of the vessel 2 to the upper part of the vessel 1. The vessel 2 comprises an orifice 11 and valve 12 positioned at the lower end of vessel 2 and positioned below the splayed end 10 of the pipe 9, and vessel 2 is also provided with an inlet 13 and an outlet 14 for aqueous sodium chloride solution, the inlet 13 and outlet 14 comprising valves 15 and 16 respectively. The vessel 1 comprises a plurality of inlets 17, 18, 19, 20, 21 through which regenerating liquids may be introduced into the vessel 1 and outlets 22 and 30 through which the regenerating liquids may be removed from the vessel 1. The inlets 17, 18, 19, 20, 21 and the outlets 22 and 30 comprises valves 23, 24, 25 26, 27, 28 and 29 respectively.

In operation of the process of the invention an ion-exchange material capable of removing multi valent cations from an aqueous solution of sodium chloride, for example, calcium, magnesium and/or strontium ions, was charged to vessel 1 via orifice 5 and to vessel 2 via orifice 7. Aqueous sodium chloride solution was charged to vessel 2 via line 13, the solution passed upwardly through the bed of ion-exchange material in vessel 2, and thus purified solution was removed from vessel 2 via line 14 to a reservoir (not shown). A stream of air was passed into vessel 2 via orifice 11 thereby causing ion-exchange material to be passed upwardly into pipe 9 and thence into vessel 1. In the upper part of vessel 1 the air was separated from the ion-exchange materials and was removed from vessel 1 via line 22. As ion-exchange material was progressively removed from vessel 2 it was progressively replaced by ion-exchange material passing downwardly through pipe 3 from vessel 1 to vessel 2. The ion-exchange material transferred to vessel 1 from vessel 2 was regenerated prior to being returned to vessel 2 by charging the following liquids to vessel 1; demineralised water via line 21, aqueous hydrochloric acid solution via line 20, demineralised water via line 19, aqueous sodium hydroxide solution via line 18 and demineralised water via line 17. The ion-exchange material passed progressively downwards in vessel 1. As the material passed downwards it was contacted sequentially with demineralised water (line 21) which washed residual sodium chloride solution from the ion-exchange material, with hydrochloric acid (line 20) which removed the multivalent cations, e.g. calcium magnesium and/or strontium, from the material and replaced these cations by hydrogen ions, with demineralised water(line 19) which washed the material, with aqueous sodium hydroxide solution (line 18) which replaced the hydrogen ions in the material by sodium ions, and with demineralised water (line 17) which washed the material immediately prior to its entry into vessel 2 via pipe 3. The liquids which were charged to vessel 1 via lines 17

to 2l were removed from vessel I via line 22 and 30.

It will be appreciated that the process of the invention described with reference to the Figure was operated in a continuous manner. Thus, ion-exchange material in vessel 2, in which removal of multivalent cations from the aqueous sodium chloride solution was effected, was passed continuously through vessel 2 and from vessel 2 to vessel I. Ion-exchange material in vessel I, in which the ion exchange material was regenerated, was passed continuously through vessel I and from vessel I to vessel 2 for re-use in the removal of multivalent cations from the aqueous sodium chloride solution.

In an alternative embodiment of the apparatus the valve 4 in line 3 was omitted and replaced by a constriction in the line 3, and lines l7, l9 and 21, and the associated valves 23, 25 and 27 repectively, were omitted.

In operation of the process of the invention in this alternative embodiment of the apparatus the ion-exchange materials transferred to vessel I from vessel 2 was regenerated prior to being returned to vessel 2 by charging the following liquids to vessel I; aqueous hydrochloric acid via line 20 and aqueous sodium hydroxide solution via line I8. The ion-exchange material passed progressively downwards in vessel I and it was contacted sequentially with hydrochloric acid (line 20) which removed the multi-valent cations, e.g. calcium magnesium and/or strontium, from the material and replaced these cations by hydrogen ions, and by aqueous sodium hydroxide solution (line I8) which replaced the hydrogen ions in the material by sodium ions.

In an alternative way of operating the process of the invention the stream of air which was passed into vessel 2 via orifice Il was replaced by a stream of water thereby causing ion-exchange material to be passed upwardly into pipe 9 and thence into vessel I, and in the upper part of vessel I the water was separated from the ion-exchange material and was removed from vessel I via line 22.

**Claims**

1. A process for removing ionic-impurities from an aqueous solution of an alkali metal chloride by contacting the solution with an ion-exchange material and thereafter contacting the ion-exchange material with a liquid medium to regenerate the ion-exchange material, in which the process is effected in an apparatus which comprises at least a first vessel (1) positioned above at least a second vessel (2) in which the first vessel is operatively connected to the second vessel by means of a first pipe (3) having its upper end positioned near the bottom of the first vessel and its lower end positioned near the top of the second vessel, through which ion-exchange material flows under gravity and in which the second vessel is operatively connected to the first vessel by means of a second pipe (9) which extends upwardly and internally of the second vessel, between the second vessel and the first vessel and then upwardly and internally of the first vessel with its lower end (10) positioned near the bottom of the second vessel and its upper end positioned near the top of the first vessel, and in which the process comprises effecting contact between ion-exchange material and the liquid medium in the first vessel, effecting contact between ion-exchange material and the aqueous alkali metal chloride solution in the second vessel, and tranferring ion-exchange material from the bottom of the first vessel to the top of the second vessel and from the bottom of the second vessel to the top of the first vessel.

2. A process as claimed in claim 1 in which in the first vessel the ion-exchange material and the liquid medium are contacted as the material and the liquid medium flow through the vessel.

3. A process as claimed in claim 2 in which the ion-exchange material and the liquid medium flow counter-current to each other.

4. A process as claimed in any one of claims 1 to 3 in which in the second vessel the ion-exchange material and the aqueous alkali metal chloride solution are contacted as the material and the solution flow through the vessel.

5. A process as claimed in claim 4 in which the ion-exchange material and aqueous alkali metal chloride solution flow counter-current to each other.

6. A process as claimed in claim 3 in which the liquid medium flows upwardly through the vessel.

7. A process as claimed in claim 5 in which the aqueous alkali metal chloride solution flows upwardly through the vessel.

8. A process as claimed in any one of claims 1 to 7 in which ion-exchange material from the second vessel is transferred continuously to the first vessel and in which ion-exchange material from the first vessel is transferred continuously to the second vessel.

9. A process as claimed in any one of claims 1 to 8 in which the ion-exchange material is a cation-exchange material capable of removing polyvalent cations from the aqueous alkali metal chloride solution.

10. A process as claimed in claim 9 in which the polyvalent cations comprise calcium, magnesium and/or strontium ions.

11. A process as claimed in any one of claims 1 to 10 in which the aqueous alkali metal chloride solution is an aqueous sodium chloride solution.

12. A process as claimed in any one of claims 9 to 11 in which in the aqueous alkali metal chloride solution which is charged to the second vessel the total concentration of polyvalent metal compounds is not greater than 20 ppm by weight of the solution.

13. A process as claimed in any one of claims 9 to 12 in which the liquid medium capable of regenerating the ion-exchange material comprises an aqueous solution of an acid and an aqueous solution of an alkali metal hydroxide.

14. An apparatus in which removal of tonic impurities from an aqueous solution of an alkali metal chloride may be effected by contacting the solution with an ion-exchange material and thereafter contacting the ion-exchange material with a liquid medium to regenerate the ion-exchange material, which apparatus comprises at least a first vessel positioned above at least a second vessel in which the first vessel is operatively connected to the second vessel by means of a first pipe having its upper end positioned near the bottom of the first vessel and its lower end positioned near the top of the second vessel, through which ion-exchange material flows under gravity and in which the second vessel is operatively connected to the first vessel by means of a second pipe which extends upwardly and internally of the second vessel, between the second vessel and the first vessel and then upwardly and internally of the first vessel with its lower end positioned near the bottom of the second vessel and its upper end positioned near the top of the first vessel, so that the ion-exchange material may be transferred from the bottom of the second vessel to the top of the first vessel.

## Revendications

1. Procédé pour éliminer les impuretés ioniques d'une solution aqueuse d'un chlorure de métal alcalin par mise en contact de la solution avec une matière échangeuse d'ions, puis par mise en contact de la matière échangeuse d'ions avec un milieu liquide pour régénérer la matière échangeuse d'ions, lequel procédé est exécuté dans un appareil qui comprend au moins un premier récipient (1) positionné au-dessus d'un deuxième récipient (2), dans lequel le premier récipient est raccordé fonctionnellement au deuxième récipient par une première conduite (3) ayant son extrémité supérieure positionnée près du fond du premier récipient et son extrémité inférieure positionnée près du sommet du deuxième récipient, à travers laquelle la matière échangeuse d'ions s'écoule par gravité et dans lequel le deuxième récipient est raccordé fonctionnellement au premier récipient par une deuxième conduite (9) qui s'étend en sens ascendant et à l'intérieur du deuxième récipient, entre le deuxième récipient et le premier récipient, puis en sens ascendant et à l'intérieur du premier récipient avec son extrémité inférieure (10) positionnée près du fond du deuxième récipient et son extrémité supérieure positionnée près du sommet du premier récipient, et dans lequel le procédé comprend l'exécution du contact entre la matière échangeuse d'ions et le milieu liquide dans le premier récipient, l'exécution du contact entre la matière échangeuse d'ions et la solution aqueuse de chlorure de métal alcalin dans le deuxième récipient et le transfert de la matière échangeuse d'ions du fond du premier récipient au sommet du deuxième récipient et du fond du deuxième récipient au sommet du premier récipient.

2. Procédé suivant la revendication 1, dans lequel, dans le premier récipient, la matière échangeuse d'ions et le milieu liquide sont mis en contact tandis que la matière et le milieu liquide s'écoulent dans le récipient.

3. Procédé suivant la revendication 2, dans lequel la matière échangeuse d'ions et le milieu liquide s'écoulent à contre-courant l'un de l'autre.

4. Procédé suivant l'une quelconque des revendications 1 à 3, dans lequel, dans le deuxième récipient, la matière échangeuse d'ions et la solution aqueuse de chlorure de métal alcalin sont mises en contact tandis que la matière et la solution s'écoulent dans le récipient.

5. Procédé suivant la revendication 4, dans lequel la matière échangeuse d'ions et la solution aqueuse de chlorure de métal alcalin s'écoulent à contre-courant l'une de l'autre.

6. Procédé suivant la revendication 3, dans lequel le milieu liquide s'élève en sens ascendant dans le récipient.

7. Procédé suivant la revendication 5, dans lequel la solution aqueuse de chlorure de métal alcalin s'écoule en sens ascendant dans le récipient.

8. Procédé suivant l'une quelconque des revendications 1 à 7, dans lequel la matière échangeuse d'ions sortant du deuxième récipient est transférée en marche continue au premier récipient et dans lequel la matière échangeuse d'ions sortant du premier récipient est transférée en marche continue au deuxième récipient.

9. Procédé suivant l'une quelconque des revendications 1 à 8, dans lequel la matière échangeuse d'ions est une matière échangeuse de cations capable d'éliminer les cations polyvalents de la solution aqueuse de chlorure de métal alcalin.

10. Procédé suivant la revendication 9, dans lequel les cations polyvalents comprennent des ions calcium, magnésium et/ou strontium.

11. Procédé suivant l'une quelconque des revendications 1 à 10, dans lequel la solution aqueuse de chlorure de métal alcalin est une solution aqueuse de chlorure de sodium.

12. Procédé suivant l'une quelconque des revendications 9 à 11, dans lequel, dans la solution aqueuse de chlorure de métal alcalin qui est introduite dans le deuxième récipient, la concentration totale en composés de métaux polyvalents n'est pas supérieure à 20 ppm en poids de la solution.

13. Procédé suivant l'une quelconque des revendications 9 à 12, dans lequel le milieu liquide capable de régénérer la matière échangeuse d'ions comprend une solution aqueuse d'un acide et une solution aqueuse d'un hydroxyde de métal alcalin.

14. Appareil dans lequel l'élimination des impuretés ioniques d'une solution aqueuse d'un chlorure de métal alcalin peut être effectuée par mise en contact de la solution avec une matière échangeuse d'ions et ensuite par mise en contact de la matière échangeuse d'ions avec un milieu liquide pour régénérer la matière échangeuse d'ions, lequel appareil comprend au moins un premier récipient positionné au-dessus d'au moins un deuxième récipient, dans lequel le premier récipient est raccordé fonctionnellement au deuxième récipient par une première conduite ayant son extrémité supérieure positionnée près du fond du premier récipient et son extrémité inférieure positionnée près du sommet du deuxième récipient et à travers laquelle la matière échangeuse d'ions s'écoule par gravité, et dans lequel le deuxième récipient est raccordé fonctionnellement au premier récipient par une deuxième conduite qui s'étend en sens ascendant et à l'intérieur du deuxième récipient, entre le deuxième récipient et le premier récipient, puis en sens ascendant et à l'intérieur du premier récipient avec son extrémité inférieure positionnée près du fond du deuxième récipient et son extrémité supérieure positionnée près du sommet du premier récipient, de façon que la matière échangeuse d'ions puisse être transférée du fond du deuxième récipient au sommet du premier récipient.

## Patentansprüche

1. Verfahren zum Entfernen von ionischen Verunreinigungen aus einer wässerigen Lösung eines Alkalimetallchlorids durch Inberührungbringen der Lösung mit einem Ionenaustauschmaterial und anschließendes Inberühungbringen des Ionenaustauschmaterials mit einem flüssigen Medium zur Regenerierung des Ionenaustauschmaterials, welches Verfahren in einer Vorrichtung ausgeführt wird, die mindestens einen ersten Behälter (1) aufweist, der über mindestens einem zweiten Behälter (2) angeordnet ist, wobei der erste Behälter mit dem zweiten Behälter mittels eines ersten Rohrs (3) arbeitsmäßig verbunden ist, dessen oberes Ende in der Nähe der Unterseite des ersten Behälters und dessen unteres Ende in der Nähe der Oberseite des zweiten Behälters endet und durch das Ionenaustauschmaterial unter Schwerkraft fließt, und wobei der zweite Behälter mit dem ersten Behälter mittels eines zweiten Rohrs (9) arbeitsmäßig verbunden ist, das sich innerhalb des zweiten Behälters nach oben, dann zwischen dem zweiten und dem ersten Behälter und schließlich innerhalb des ersten Behälters nach oben erstreckt, wobei sein unteres Ende (10) in der Nähe der Unterseite des zweiten Behälters und sein oberes Ende in der Nähe der Oberseite des ersten Behälters liegt, und bei welchem Verfahren das Inberühungbringen des Ionenaustauschmaterials mit dem flüssigen Medium im ersten Behälter und das Inberührungbringen des Ionenaustauschmaterials mit der wässerigen Alkalimetallchloridlösung im zweiten Behälter erfolgt und Ionenaustauschmaterial von der Unterseite des ersten Behälters zur Oberseite des zweiten Behälters und von der Unterseite des zweiten Behälters zur Oberseite des ersten Behälters geleitet wird.

2. Verfahren nach Anspruch 1, bei welchem im ersten Behälter das Ionenaustauschmaterial mit dem flüssigen Medium in Berührung gebracht wird, während das Material und das flüssige Medium durch den Behälter fließen.

3. Verfahren nach Anspruch 2, bei welchem das Ionenaustauschmaterial und das flüssige Medium im Gegenstrom zueinander fließen.

4. Verfahren nach einem der Ansprüche 1 bis 3, bei welchem im zweiten Behälter das Ionenaustauschmaterial mit der wässerigen Alkalichloridlösung in Berührung gebracht wird, während das Material und die Lösung durch den Behälter fließen.

5. Verfahren nach Anspruch 4, bei welchem das Ionenaustauschmaterial und die wässerige Alkalimetallchloridlösung im Gegenstrom zueinander fließen.

6. Verfahren nach Anspruch 3, bei welchem das flüssige Medium durch den Behälter nach oben fließt.

7. Verfahren nach Anspruch 5, bei welchem die wässerige Alkalimetallchloridlösung durch den Behälter nach oben fließt.

8. Verfahren nach einem der Ansprüche 1 bis 7, bei welchem Ionenaustauschmaterial vom zweiten Behälter kontinuierlich zum ersten Behälter überführt wird und bei welchem Ionenaustauschmaterial vom ersten Behälter kontinuierlich zum zweiten Behälter überführt wird.

9. Verfahren nach einem der Ansprüche 1 bis 8, bei welchem das Ionenaustauschmaterial ein Kationenaustauschmaterial ist, welches mehrwertige Kationen aus der wässerigen Alkalimetallchloridlösung entfernen kann.

10. Verfahren nach Anspruch 9, bei welchem die mehrwertigen Kationen aus Calcium-, Magnesium- und/oder Strontiumionen bestehen.

11. Verfahren nach einem der Ansprüche 1 bis 10, bei welchem die wässerige Alkalichloridlösung eine wässerige Natriumchloridlösung ist.

12. Verfahren nach einem der Ansprüche 9 bis 11, bei welchem in der wässerigen Alkalimetallchloridlösung, die in den zweiten Behälter eingeführt wird, die Gesamtkonzentration von Verbindungen mehrwertiger Metalle nicht höher als 20 Gew.-ppm der Lösung beträgt.

13. Verfahren nach einem der Ansprüche 9 bis 12, bei welchem das flüssige Medium, das das Ionenaustauschmaterial regenerieren kann, eine wässerige Lösung einer Säure und eine wässerige Lösung eines Alkalimetallhydroxids umfaßt.

14. Vorrichtung, in welcher ionische Verunreinigungen aus einer wässerigen Lösung eines Alkalimetallchlorids dadurch entfernt werden können, daß die Lösung mit einem Ionenaustauschmaterial in Berührung gebracht wird und hierauf das Ionenaustauschmaterial mit einem flüssigen Medium zur Regenerierung des Ionenaustauschmaterials in Berührung gebracht wird, welche Vorrichtung mindestens einen ersten Behälter aufweist, der über mindestens einem zweiten Behälter angeordnet ist, wobei der erste Behälter mit dem zweiten Behälter mittels eines ersten Rohrs arbeitsmäßig verbunden ist, dessen oberes Ende in der Nähe der Unterseite des ersten Behälters und dessen unteres Ende in der Nähe der Oberseite des zweiten Behälters endet und durch das Ionenaustauschmaterial unter Schwerkraft fließt, und wobei der zweite Behälter mit dem ersten Behälter mittels eines zweiten Rohrs arbeitsmäßig verbunden ist, das sich innerhalb des zweiten Behälters nach oben, dann zwischen dem zweiten und dem ersten Behälter und schließlich innerhalb des ersten Behälters nach oben erstreckt, wobei sein unteres Ende in der Nähe der Unterseite des zweiten Behälters und sein oberes Ende in der Nähe der Oberseite des ersten Behälters liegt, so daß das Ionenaustauschmaterial von der Unterseite des zweiten Behälters zur Oberseite des ersten Behälters geleitet werden kann.

FIGURE